(19) Europäisches Patentamt
European Patent Office
Office européen des brevets

(11) **EP 1 441 313 B1**

(12) **FASCICULE DE BREVET EUROPEEN**

(45) Date de publication et mention de la délivrance du brevet:
**13.05.2009 Bulletin 2009/20**

(51) Int Cl.:
***G07F 7/10*** *(2006.01)* ***H04L 9/30*** *(2006.01)*

(21) Numéro de dépôt: **04001402.9**

(22) Date de dépôt: **23.01.2004**

(54) **Procédé cryptographique à clé publique pour la protection d' une puce électronique contre la fraude**

Kryptographisches Verfahren mit öffentlichem Schlüssel zum Schützen einer integrierten Schaltung gegen Missbrauch

Public key cryptographical method for protecting an electronic chip against fraud

(84) Etats contractants désignés:
**AT BE BG CH CY CZ DE DK EE ES FI FR GB GR HU IE IT LI LU MC NL PT RO SE SI SK TR**

(30) Priorité: **24.01.2003 FR 0301108**

(43) Date de publication de la demande:
**28.07.2004 Bulletin 2004/31**

(73) Titulaire: **FRANCE TELECOM**
**75015 Paris (FR)**

(72) Inventeur: **Girault, Marc**
**14000 Caen (FR)**

(74) Mandataire: **Jeune, Pascale**
**FRANCE TELECOM/T&I/PIV/PI**
**38-40, rue du Général-Leclerc**
**92794 Issy Moulineaux Cédex 9 (FR)**

(56) Documents cités:
**EP-A- 0 666 664        EP-A- 0 723 251**
**FR-A- 2 826 531        FR-A- 2 828 780**
**US-A- 4 995 082**

## Description

La présente invention se rapporte au domaine de la cryptographie. En particulier, l'invention se rapporte aux procédés cryptographiques de protection contre la fraude d'une puce électronique dans des transactions entre une application et la puce.

L'invention trouve une application très avantageuse en ce qu'elle permet de protéger contre la fraude des puces à circuit intégré à logique câblée, notamment les puces qui équipent les cartes prépayées utilisées dans des transactions diverses telles que l'établissement de communications téléphoniques, le paiement d'objets dans un distributeur automatique, la location d'emplacements de stationnement à partir d'un parcmètre, le paiement d'un service comme un transport public ou comme la mise à disposition d'infrastructures (péage, musée, bibliothèque,...).

Actuellement, les cartes prépayées sont susceptibles de subir différents types de fraude. Un premier type de fraude consiste à dupliquer sans autorisation la carte, le terme clonage étant souvent utilisé pour caractériser cette opération. Un deuxième type de fraude consiste à modifier les données attachées à une carte, en particulier le montant du crédit inscrit dans la carte. Pour lutter contre ces fraudes il est fait appel à la cryptographie, d'une part pour assurer l'authentification de la carte au moyen d'une authentification et/ou pour assurer l'authentification des données au moyen d'une signature numérique et, d'autre part pour assurer le cas échéant la confidentialité des données au moyen d'un chiffrement. La cryptographie met en jeu deux entités, qui sont dans le cas de l'authentification un vérificateur et un objet à vérifier, et elle peut être soit symétrique, soit asymétrique. Lorsqu'elle est symétrique (ou "à clé secrète", les deux termes étant synonymes), les deux entités partagent exactement la même information, en particulier une clé secrète. Lorsqu'elle est asymétrique (ou "à clé publique", les deux termes étant synonymes) une des deux entités possède une paire de clés dont l'une est secrète et l'autre est publique ; il n'y a pas de clé secrète partagée. Dans de nombreux systèmes, notamment lorsque la puce est de type "à logique câblée", seule la cryptographie symétrique est mise en oeuvre avec des cartes prépayées, car la cryptographie asymétrique reste lente et coûteuse. Les premiers mécanismes d'authentification développés en cryptographie symétrique consistent à calculer une fois pour toutes une valeur d'authentification, différente pour chaque carte, à la stocker dans la mémoire de la carte, à la lire à chaque transaction et à la vérifier en interrogeant une application du réseau supportant la transaction où les valeurs d'authentification déjà attribuées sont soit stockées soit recalculées. Ces mécanismes assurent une protection insuffisante parce que la valeur d'authentification peut être espionnée, reproduite et rejouée frauduleusement étant donné qu'elle est toujours la même pour une carte donnée, permettant ainsi de réaliser un clone de cette carte. Pour lutter contre les clones, les mécanismes d'authentification passifs de cartes sont remplacés par des mécanismes d'authentification actifs qui peuvent en outre assurer l'intégrité des données.

Le principe général des mécanismes d'authentification actifs symétriques est le suivant : lors d'une authentification, la puce électronique et l'application calculent une valeur d'authentification qui est le résultat d'une fonction appliquée à une liste d'arguments déterminée à chaque authentification; la liste d'arguments pouvant comprendre un aléa, l'aléa étant une donnée déterminée par l'application à chaque authentification, une donnée contenue dans la puce électronique et une clé secrète connue de la puce électronique et de l'application. Lorsque la valeur d'authentification calculée par la puce électronique est identique à la valeur d'authentification calculée par l'application, la puce électronique est jugée authentique et la transaction entre la puce électronique et l'application est autorisée.

De tels mécanismes d'authentification sont largement connus mais la plupart exigent des capacités de calcul au moins égales à celles dont dispose un microprocesseur. Ces mécanismes conviennent donc aux cartes à microprocesseur, mais rarement aux puces à logique câblée, lesquelles disposent de moyens de calcul beaucoup plus rudimentaires.

Un premier pas a été effectué lorsque des mécanismes actifs d'authentification symétriques ont pu être intégrés dans des puces à logique câblée. Par exemple, la demande de brevet française publiée le 27.12.2002 sous le numéro FR 2826531 décrit un procédé permettant de spécifier de tels mécanismes. On notera que la valeur d'authentification produite par ces mécanismes peut aussi, comme l'enseigne la demande de brevet française précédente, être interprétée comme une séquence de bits pseudo-aléatoires et, en faisant varier au moins l'un des paramètres d'entrée, le procédé de calcul de la valeur d'authentification devient alors un procédé de génération de bits pseudo-aléatoires.

Cependant, les mécanismes à clé secrète imposent que le dispositif de vérification, en charge de l'authentification de la puce, tel que ceux présents dans un téléphone public, un terminal de paiement électronique, ou encore un portillon de transport en commun, connaisse la clé secrète détenue par ladite puce. Il en découle un inconvénient majeur, à savoir que, si l'on souhaite que ledit dispositif puisse authentifier n'importe quelle puce émise en relation avec l'application, soit il doit stocker les clés secrètes de toutes les puces, soit il doit stocker une clé de base, appelée aussi clé-mère ou clé-maître, permettant de retrouver la clé secrète de n'importe quelle puce. Dans les deux cas, chacun de ces dispositifs stocke suffisamment d'information pour pouvoir retrouver les clés secrètes de toutes les puces émises, et stocke donc suffisamment d'information pour pouvoir fabriquer des clones de n'importe laquelle d'entre elles. Il s'ensuit qu'une intrusion réussie contre n'importe lequel des dispositifs de vérification anéantirait la sécurité de l'application dans son ensemble.

Il existe donc un besoin impérieux de pouvoir intégrer un mécanisme actif d'authentification à clé publique dans une puce à logique câblée, notamment dans les applications déployant un grand nombre de puces, ce qui est généralement le cas des applications utilisant des puces à logique câblée, car elles sont très bon marché. Or un tel mécanisme n'existe pas à l'heure actuelle. La raison en est que les mécanismes à clé publique requièrent généralement de nombreuses opérations portant sur de grands nombres, et donc qu'ils sont inappropriés à une intégration dans des puces à logique câblée, dans lesquelles la surface de silicium est extrêmement réduite, et dont la logique de calcul se réduit au câblage d'opérations extrêmement élémentaires. Ces opérations élémentaires sont effectuées généralement en série, en ce sens que les opérandes sont introduites séquentiellement bit après bit, et que cette introduction modifie progressivement l'état d'un registre interne dont la valeur finale sert de base au calcul du résultat de la fonction.

La présente invention se rapporte aux mécanismes actifs d'authentification à clé publique qui peuvent être mis en oeuvre dans une carte à logique câblée.

Plus précisément, la présente invention porte sur un procédé cryptographique asymétrique de protection contre la fraude de la puce électronique, dans des transactions entre une application et la puce électronique, plus particulièrement adapté aux puces à logique câblée et plus particulièrement destiné à mettre en place un mécanisme d'authentification, qui soit dépourvu des inconvénients de la cryptographie symétrique mentionnés ci-dessus, de manière à renforcer la sécurité de l'application dans son ensemble, et en particulier de rendre la création de clones plus ardue.

A cette fin l'invention a pour objet un procédé cryptographique asymétrique de protection contre la fraude d'une puce électronique, adapté pour des puces à logique câblée, dans des transactions entre une application et la puce électronique, consistant à calculer dans la puce électronique une valeur V d'authentification à partir de paramètres d'entrée. Le procédé comprend les étapes qui consistent :

- à produire par la puce un nombre pseudo-aléatoire dit aléa r propre à la transaction au moyen d'un générateur pseudo-aléatoire série inclus dans la puce,
- à transmettre de la puce à l'application un paramètre x calculé par l'application préalablement à la transaction, relié à l'aléa r par une relation mathématique et stocké en mémoire de données de la puce,
- à calculer par la puce un paramètre y au moyen d'une fonction série ayant pour paramètres d'entrées au moins l'aléa r propre à la transaction et une clé s privée appartenant à une paire de clés asymétrique (s, p), ce paramètre y constituant tout ou partie de la valeur d'authentification V,
- à transmettre la valeur d'authentification V de la puce à l'application et,

- à vérifier par l'application ladite valeur d'authentification V au moyen d'une fonction de vérification dont les paramètres d'entrées consistent exclusivement en des paramètres publics, contenant au moins la clé p publique.

L'invention a en outre pour objet un dispositif à puce électronique permettant la mise en oeuvre d'un procédé cryptographique asymétrique de protection contre la fraude de la puce électronique selon l'objet précédent, dans des transactions entre une application et la puce électronique, consistant à calculer par la puce électronique une valeur V d'authentification à partir de paramètres d'entrée. Le dispositif comprend :

- un générateur pseudo-aléatoire série produisant un aléa r propre à la transaction,
- un premier moyen de mémorisation dans lequel est stocké au moins une valeur de x, la valeur du paramètre x étant calculée préalablement à la transaction par l'application et étant reliée à la valeur de l'aléa r par une relation mathématique,
- un moyen de transmission de la puce électronique à l'application du paramètre x relié à l'aléa r propre à la transaction,
- un moyen de mise en oeuvre d'une fonction série ayant pour paramètres d'entrées au moins l'aléa r propre à la transaction et une clé s privée appartenant à une paire de clés asymétrique (s, p) et fournissant en sortie un paramètre y,
- un moyen de sortie pour constituer la valeur V d'authentification à partir d'au moins le paramètre y

L'invention a en outre pour objet un dispositif de vérification pour la mise en oeuvre d'un procédé cryptographique asymétrique de protection contre la fraude d'une puce électronique, dans des transactions entre une application et la puce électronique, selon un objet de l'invention consistant à vérifier une valeur V d'authentification calculée par la puce électronique à partir de paramètres exclusivement publics. Le dispositif comprend un moyen de mise en oeuvre de la fonction de vérification prenant en entrée au moins la valeur V d'authentification et la clé p publique.

Un procédé selon l'invention a pour avantage de permettre la production d'une valeur d'authentification V vérifiable exclusivement au moyen de paramètres publics, tout en étant produite exclusivement par des fonctions série, c'est-à-dire des fonctions traitant séquentiellement les bits des paramètres qui en constituent les entrées.

Les paramètres d'entrée du procédé cryptographique et du dispositif sont traités dans la fonction série qui fournit en sortie une donnée dépendant de tout ou partie des paramètres d'entrée.

Les paramètres d'entrée du procédé et du dispositif appartiennent à une liste qui comprend, dans le cas de la mise en oeuvre d'un mécanisme d'authentification, au moins un identifiant I, une clé s privée secrète, une clé publique p correspondant à la clé s privée, d'un certificat de cette clé publique, d'un deuxième aléa t fourni par le dispositif de vérification.

Le générateur pseudo-aléatoire série permettant de calculer l'aléa r peut avantageusement reposer sur un procédé d'authentification symétrique du type de ceux décrits dans la demande de brevet française publiée le 27.12.2002 sous le numéro FR 2826531 susmentionnée. Ainsi, si on désigne par f(K,M) la fonction de calcul d'un tel procédé, notation dans laquelle K désigne la clé secrète symétrique et M désigne l'ensemble des autres opérandes de la fonction f, alors l'aléa r peut être produit par application répétée de la fonction f à des valeurs différentes de M tout en conservant la même valeur de K. A titre d'exemple, si la taille de la valeur de sortie z de f est égale à k bits et si la taille de l'aléa r est égale à 16k bits, le premier aléa r utilisé lors de la première authentification de la puce peut être choisi égal à la concaténation des seize valeurs de sortie $f(K, M_1)$, $f(K, M_2)$,..., $f(K, M_{16})$ ; le second aléa peut être choisi égal à la concaténation des seize valeurs de sortie $f(K, M_{17})$, $f(K, M_{18})$,..., $f(K, M_{32})$ etc., toutes les valeurs $M_i$ étant distinctes les une des autres (typiquement, la valeur de $M_{i+1}$ est obtenue en incrémentant la valeur de M;). De nombreuses autres façons d'utiliser le procédé d'authentification à des fins de générateur pseudo-aléatoire sont possibles.

La fonction série contient des additions, des soustractions et des décalages à gauche ou à droite. En effet, ces opérations peuvent être très facilement réalisées de façon séquentielle.

D'autres caractéristiques et avantages de l'invention apparaîtront lors de la description qui suit faite en regard de dessins annexés de modes particuliers de réalisation donnés à titre d'exemples non limitatifs.

La figure 1 est un organigramme d'un procédé selon l'invention.

La figure 2 est un schéma d'un dispositif à puce électronique selon l'invention.

La figure 3 est un schéma d'un exemple d'un générateur pseudo-aléatoire d'un dispositif à puce électronique selon l'invention.

La figure 4 est un schéma d'un exemple d'un moyen de mise en oeuvre d'une fonction série d'un dispositif à puce électronique selon l'invention.

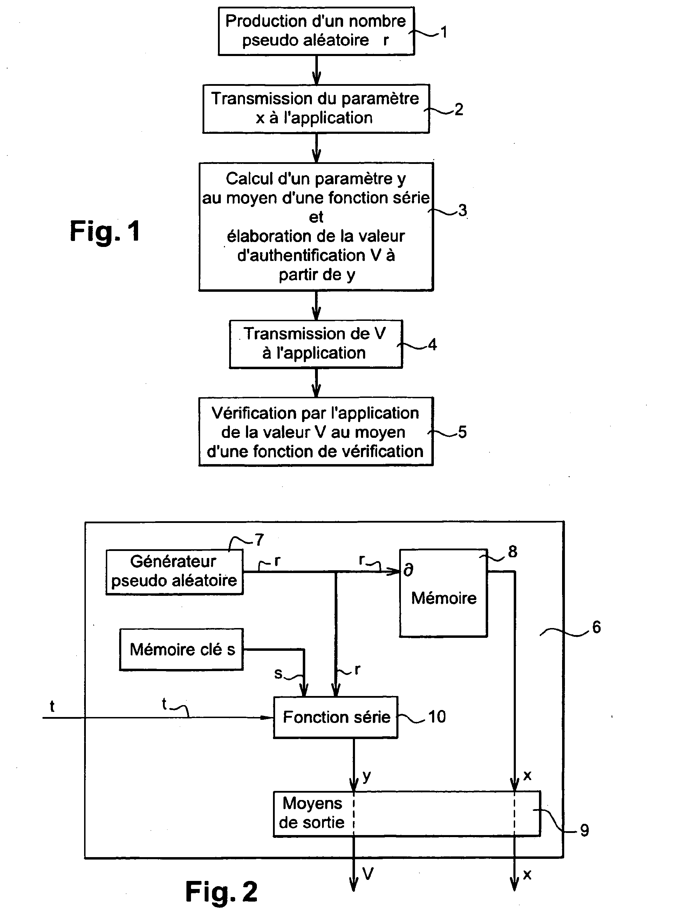

La figure 1 représente un organigramme d'un procédé cryptographique asymétrique de protection contre la fraude d'une puce électronique selon l'invention, dans des transactions entre une application et la puce électronique.

Le procédé consiste à calculer dans la puce électronique une valeur d'authentification à partir de paramètres d'entrée.

Dans une première étape le procédé consiste à produire 1 par la puce un nombre pseudo-aléatoire dit aléa r au moyen d'un générateur pseudo-aléatoire série inclus dans la puce. L'aléa r est propre à la transaction.

Dans une deuxième étape le procédé consiste à transmettre 2 de la puce à l'application un paramètre x. Ce paramètre x est calculé préalablement à la transaction par l'application et stocké en mémoire de données de la puce. Ce paramètre x est relié à l'aléa r par une relation mathématique. L'application calcule au moins un paramètre x, avantageusement elle en calcule plusieurs. Selon un cas particulier de mise en oeuvre, ces paramètres x sont le résultat d'une fonction mathématique appliquée à des valeurs prises successivement dans un ensemble donné pour une puce donnée. Cet ensemble est tel que les différentes valeurs de l'aléa r générées par la puce soient comprises dans cet ensemble.

Ainsi la fonction mathématique reliant les aléas r et les paramètres x consiste typiquement en une exponentielle dans un ensemble G muni d'une opération ayant au moins pour propriété d'être associative et notée sous la forme d'une multiplication, c'est-à-dire que la fonction est $x = g^r$, où r désigne un entier et g désigne un élément dudit ensemble G choisi préalablement par l'application.

r est un nombre pseudo-aléatoire, différent pour chaque puce et pour chaque authentification. Il est calculé à deux reprises : la première fois par l'application, la deuxième fois par la puce elle-même. Après avoir calculé r, l'application calcule le x correspondant. L'application stocke ensuite au moins une valeur de x dans la puce au moment de la personnalisation de cette dernière. Avantageusement, l'application stocke plusieurs valeurs de x. Comme l'application et la puce doivent produire la même valeur de *r*, il est bien sûr impératif que le générateur pseudo-aléatoire de l'application et celui de la puce soient strictement identiques.

g peut être avantageusement le même pour toutes les puces électroniques liées à l'application ou peut être propre à la puce. Dans ce dernier cas, g fait partie intégrante de la clé p publique de la puce électronique. Des exemples typiques d'ensembles G sont, n désignant un entier positif quelconque, le groupe $Z_n^*$ des entiers positifs ou nuls inférieurs à n et premiers avec n, ou bien encore, toute courbe elliptique construite sur un corps fini.

Dans une troisième étape, le procédé consiste à calculer 3 par la puce un paramètre y au moyen d'une fonction série ayant pour paramètres d'entrée au moins l'aléa r propre à la transaction et une clé s privée secrète appartenant à une paire de clés asymétrique (s, p), ce paramètre y constituant tout ou partie de la valeur d'authentification V. La fonction série consiste en une fonction arithmétique.

Dans une quatrième étape, le procédé consiste à transmettre 4 la valeur d'authentification V de la puce à l'application.

Dans une cinquième étape, le procédé consiste à vérifier 5 par l'application ladite valeur d'authentification V au moyen d'une fonction de vérification dont les paramètres d'entrées consistent exclusivement en des paramètres publics, contenant au moins la clé p publique.

La figure 2 représente schématiquement un dispositif à puce électronique selon l'invention. Le dispositif à puce électronique permet la mise en oeuvre d'un procédé cryptographique asymétrique de protection contre la fraude de la puce électronique selon l'invention, dans des transactions entre une application et la puce électronique, consistant à calculer par la puce électronique une valeur V d'authentification à partir de paramètres d'entrée.

Le dispositif 6 comprend :

- un générateur 7 pseudo-aléatoire série produisant un aléa r propre à la transaction,
- un premier moyen 8 de mémorisation dans lequel sont stockés un ou plusieurs paramètres x calculés préalablement à la transaction par l'application, chacun de ces paramètres x étant relié par une même relation mathématique à une valeur de l'aléa r comprise dans un ensemble de valeurs pouvant être produites par le générateur pseudo-aléatoire série,
- un premier moyen 9 de sortie du paramètre x relié à l'aléa r propre à la transaction,
- un moyen 10 de mise en oeuvre d'une fonction série ayant pour paramètres d'entrées au moins l'aléa r propre à la transaction et une clé s privée appartenant à une paire de clés asymétrique (s, p), ce paramètre y constituant tout ou partie de la valeur d'authentification V,
- un second moyen 9 de sortie de la valeur V d'authentification après constitution de cette valeur à partir d'au moins le paramètre y.

Le générateur 7 pseudo-aléatoire série repose, dans le cas de l'exemple retenu et décrit en regard de la figure 2, sur un procédé d'authentification symétrique du type de ceux décrits dans la demande de brevet française publiée le 27.12.2002 sous le numéro FR 2826531 susmentionnée. Ainsi, si on désigne par f(K,M) la fonction de calcul d'un tel procédé, notation dans laquelle K désigne la clé secrète symétrique et M désigne l'ensemble des autres opérandes de la fonction f, alors l'aléa r est produit par application répétée de la fonction f à des valeurs différentes de M tout en conservant la même valeur de K. A titre d'exemple, si la taille de la valeur de sortie z de f est égale à k bits et si la taille de l'aléa r est égale à 16k bits, le premier aléa r utilisé lors de la première authentification de la puce est choisi égal à la concaténation des seize valeurs de sortie $f(K, M_1), f(K, M_2),..., f(K, M_{16})$ ; le second aléa choisi est égal à la concaténation des seize valeurs de sortie $f(K, M)_{17}, f(K, M_{18}),..., f(K, M_{32})$ etc, toutes les valeurs $M_i$ étant distinctes les unes des autres.

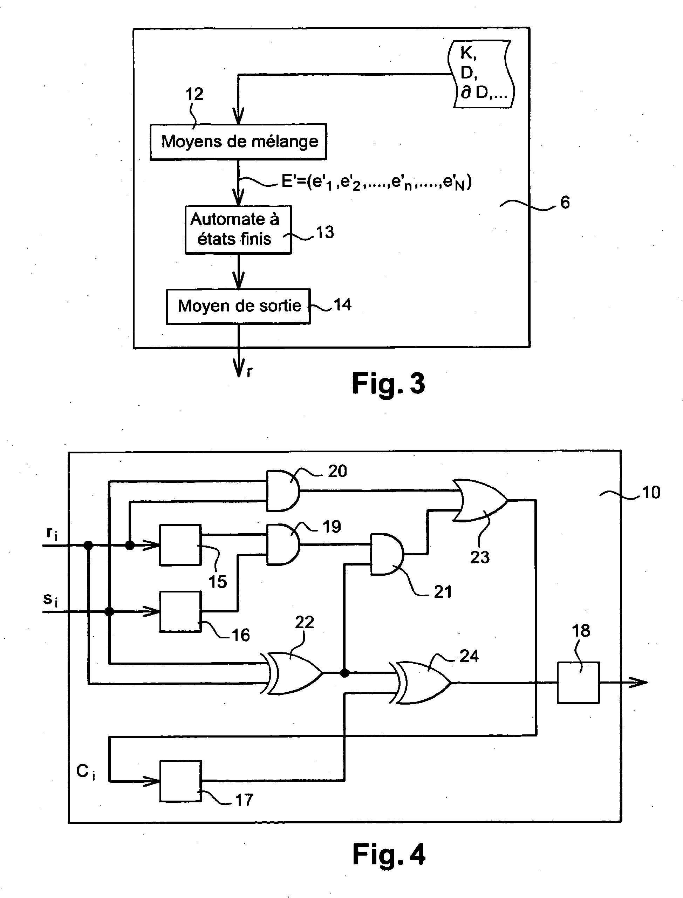

La figure 3 schématise un tel générateur 6 pseudo-aléatoire série. Ce générateur comprend des moyens 12 de mélange de tout ou partie des paramètres d'entrée pour fournir en sortie une donnée

$E' = (e'_1, e'_2, ... e'_n, ..., e'_N)$ résultat du mélange, un automate 13 à états finis qui passe d'un état ancien à un état nouveau selon une fonction dépendant au moins de l'état ancien et d'une valeur de la suite de bits $(e'_1, e'_2, ... e'_n, ..., e'_N)$, un moyen 14 de sortie pour calculer la valeur z à partir d'arguments d'entrée comprenant au moins un état de l'automate, puis pour déterminer la valeur de l'aléa r choisi en effectuant la concaténation de seize valeurs de sortie $f(K, M_1), f(K, M_2),..., f(K, M_{16})$ successives. Les paramètres d'entrée des moyens 12 de mélange peuvent être pris dans une liste non exhaustive qui comprend : une clé secrète K, des données D internes à la puce, l'adresse mémoire des données D, des données D' externes à la puce, un aléa R' fourni par l'application.

Les moyens 12 de mélange mettent en oeuvre une fonction de mélange MIX qui peut être une fonction linéaire ou non-linéaire des données d'entrée.

Un premier exemple de fonction linéaire consiste à effectuer le produit scalaire entre les données d'entrée.

Selon un autre exemple de mise en oeuvre d'une fonction linéaire, les moyens de mélange comprennent un registre à décalage à rétroaction linéaire dans lequel les bits des paramètres d'entrée sont entrés successivement et influent sur l'état initial du registre et/ou sur la valeur des bits de rétroaction.

Selon un exemple de mise en oeuvre d'une fonction non-linéaire, les moyens de mélange comprennent un registre à décalage à rétroaction non linéaire, dans lequel les bits des paramètres d'entrée sont entrés successivement. La valeur de sortie S' peut être constituée d'un ou plusieurs bits extraits du contenu de ce registre.

Un premier exemple d'automate 13 AUT consiste à utiliser un circuit booléen. C'est-à-dire un circuit qui, par exemple à un vecteur de k+1 bits $(A_1 A_2, ... A_{k+1})$ associe un vecteur de k bits $(A'_1, A'_2, ... A'_k)$, où chaque bit $A'_i$; est obtenu à partir des bits $(A_1, A_2, ... A_{k+1})$ à l'aide d'opérations élémentaires telles que OU exclusif, OU (inclusif), ET, NON et où $(A_1, A_2, ... A_k)$ représente l'état ancien de l'automate. L'automate possède un état interne de k bits $(A_1, A_2, ... A_k)$ et présente en sortie un nouvel état $(A'_1, A'_2, ... A'_k)$, à chaque fois qu'un nouveau vecteur $(A_1, A_2, ... A_k, S'e')$ est présent en entrée du circuit booléen, le nouveau vecteur étant constitué de l'état interne et de la sortie de la fonction de mélange MIX.

Un second exemple d'automate 13 consiste à utiliser des transformations de bits définies par des tableaux de nombres. Dans le cas où k=8, il est par exemple possible de diviser l'octet $(A_1, A_2, ... A_8)$ en deux quartets $(A_1, A_2, A_3, A_4)$ et $(A_5, A_6, A_7, A_8)$, puis d'appliquer à chaque quartet une transformation T si le bit de sortie E'e' de la fonction de mélange vaut zéro, ou une transformation U si E'e' vaut un. La transformation T est définie par un tableau qui associe à chaque valeur de quartet (a,b,c,d) une valeur de quartet (a',b',c',d'). De même pour U.

Lorsque toutes les valeurs d'entrée ont été prises en compte, l'automate 13 est dans un certain état final $(F_1, F_2, \ldots F_k)$.

Le moyen 14 de sortie du générateur pseudo-aléatoire série met typiquement en oeuvre une fonction de sortie qui est la fonction identité appliquée à l'état final de l'automate et une opération de concaténation. Ce moyen est par exemple une zone mémoire de taille égale à la taille de l'aléa r, 16k bits.

Le premier moyen 8 de mémorisation dans lequel sont stockés un ou plusieurs paramètres x consiste typiquement en une mémoire du type non volatile pouvant éventuellement être ré-écrite. Les paramètres x sont écrits dans la mémoire avant commercialisation de la puce électronique. La valeur de l'aléa r intervenant dans le calcul du paramètre x doit être choisie de façon telle que la puce soit capable de recalculer cette valeur à l'identique. Dans l'exemple de générateur pseudo-aléatoire série décrit en regard de la figure 2, cette condition implique que la clé secrète K soit partagée par la puce et par l'application. Ainsi, avant la mise en circulation de la puce, l'application calcule un certain nombre de valeurs de x par application répétée du procédé d'authentification dont la fonction de calcul a été notée f ci-dessus, et stocke ces valeurs dans la mémoire de données de la puce. A chaque authentification, la puce recalcule l'aléa r et lit en mémoire de données la valeur du paramètre x qui lui correspond. Dans l'exemple de générateur pseudo-aléatoire série décrit en regard de la figure 2, la correspondance entre r et x est typiquement établie en choisissant pour valeur de $M_1$ une information permettant de déterminer l'adresse de la valeur de x correspondant à cette valeur de r, la valeur de $M_{i+1}$ pour i supérieur ou égal à 0 étant obtenue en incrémentant la valeur de $M_i$.

Afin d'économiser de la place en mémoire, le paramètre x peut être avantageusement choisi égal à l'image par une fonction de hachage h de l'élément $g^r$ (ainsi éventuellement qu'à d'autres éléments, tels que des données d'application) plutôt qu'à cet élément lui-même, c'est-à-dire que l'on a : $x = h(g^r, D)$ où D désigne un champ optionnel contenant par exemple des données liée à l'application. Par exemple, D désigne un montant en euro décidé par l'application. Dans ce cas, chaque coupon représente une pièce de monnaie électronique, et chaque authentification représente la dépense d'une telle pièce.

Le premier moyen 9 de sortie du paramètre x relié à l'aléa r propre à la transaction est typiquement un buffer d'entrées/sorties.

Un exemple de moyen 10 de mise en oeuvre d'une fonction série est décrit en regard de la figure 4. La fonction série a pour paramètres d'entrée l'aléa r et une clé s privée secrète appartenant à une paire de clés asymétrique (s, p). La clé p est publique.

Le moyen 10 se compose d'un additionneur de bits avec calcul et prise en compte d'une retenue.

La valeur du bit courant $r_i$ de r est capturée dans un premier registre 15, la valeur du bit courant $s_i$ de s est capturée dans un second registre 16. Un troisième registre 17 capture la retenue c; qui résulte des additions de bits qui ont précédé. Enfin, un quatrième registre 18 capture le bit $y_i$ obtenu après addition des valeurs des bits courants $r_i$ et $s_i$ avec la retenue obtenue lors de l'addition précédente, cette retenue correspondant au contenu du troisième registre 17. La retenue $c_i$ résulte de la prise en compte de la retenue générée lors de l'addition des bits précédents, sortie du composant 19 ET dont les entrées sont les sorties des deux premiers registres 15, 16, et de la retenue générée lors de l'addition des bits courants, sortie du composant 20 ET dont les entrées sont les valeurs des bits courants $r_i$ et $s_i$. Un composant 21 ET intermédiaire génère une retenue lorsqu'il y a une retenue générée lors de l'addition des bits précédents et lorsqu'un seul des bits courants est à un, sortie du composant 22 ou exclusif dont les entrées sont les valeurs des bits courants.

La retenue $c_i$ est donc un 23 OU entre la sortie du composant 21 ET intermédiaire et du composant 20 ET dont les entrées sont les valeurs des bits courants $r_i$ et $s_i$. Cette retenue $c_i$ est capturée dans le troisième registre 17 pour être prise en compte lors de l'addition des bits suivants de $r_i$ et $s_i$.

Le bit $y_i$ résulte de l'addition des valeurs des bits courants $r_i$ et $s_i$, sortie du composant 22 OU exclusif dont les entrées sont les valeurs des bits courants $r_i$ et $s_i$, avec la valeur de la retenue, sortie du composant 24 OU exclusif dont les entrées sont la sortie du composant 22 OU exclusif précédent et la sortie du troisième registre 17.

Les sorties des registres 15, 16, 17, 18 sont initialisées à 0.

Ceci donne en final : $y_i = r_i + s_i + c_i$ (mod 2) et $c_{i+1} = r_i + s_i + c_i$ (div2) , où $c_0$ est choisi égal à 0.

Selon une application particulière, la fonction série a en outre pour paramètre d'entrée un aléa t fourni par l'application.

Après que la puce a produit un aléa r selon le procédé décrit en regard de la figure 2, puis lu la valeur du paramètre x qui correspond à la valeur dudit aléa dans sa mémoire de données (par exemple à travers la fonction $x = g^r$), elle envoie à l'application la valeur de x, après quoi l'application envoie à la puce un aléa t dont la taille est réduite à 1 bit.

Deux cas se présentent alors. Si la valeur de t est égale à 0, la puce choisit y = r. Si la valeur de t est égale à 1, la puce choisit y = r + s. L'implantation de ce choix est connue de l'homme du métier et n'est donc pas détaillée.

La valeur d'authentification V est prise égale à y, et est envoyée à l'application.

La vérification consiste à tester l'équation : $g^y = x$ si t est égal à 0, ou bien $g^y = xp$ si t est égal à 1, où p est la clé publique de la puce correspondant à sa clé secrète s, définie par la fonction $p = g^s$. Si ces paramètres sont choisis suffisamment grands, il est infaisable de retrouver s à partir de g et p selon l'hypothèse dite du logarithme discret, qui est une hypothèse aujourd'hui communément admise.

Selon une application particulière, une fonction de hachage h peut être utilisée pour le calcul de x. Dans ce cas, l'équation de vérification devient : $h(g^y, D) = x$ si t est égal à 0 ou bien $h(g^y / p, D) = x$ si t est égal à 1. Pour éviter toute division dans l'équation de vérification, il est aussi possible de choisir y = r - s plutôt que y = r + s, auquel cas la seconde équation de vérification devient : $h(g^y . p, D) = x$ Une autre possibilité est de choisir $p = g^{-s}$ plutôt que $p = g^s$, qui conduit aux équations de vérification suivantes : $h(g^y, D) = x$ et $h(g^y . p, D) = x$ .

Dans les mises en oeuvre précédemment décrites, toute autre puce que celle connaissant la valeur secrète s a au plus une chance sur deux de fournir une valeur d'authentification qui soit reconnue comme valide par l'application. Ceci permet déjà d'établir une distinction entre une puce authentique et un clone, mais cette distinction reste insuffisante dans la plupart des cas réels d'application.

Pour diminuer notablement les chances de succès d'un clone, une solution consiste à augmenter le nombre de bits m de l'aléa t. Par exemple, l'aléa t est choisi égal à une chaîne de 64 bits $(t_{63}, t_{62},..., t_0)$ dont un seul des bits est égal à 1. Soit i l'unique indice tel que $t_i$ est égal à 1, alors la valeur de y est choisie égale à : $y = r + 2^i s$. Cette valeur est très facile à calculer séquentiellement puisque cela revient à effectuer une addition entre r et l'entier obtenu en décalant s de i bits vers la gauche (si les poids forts se trouvent à gauche). L'équation de vérification est alors : $g^y = xp^{2i}$. Dans ces conditions, toute autre puce que celle connaissant la valeur secrète s, a au plus une chance sur 64 de fournir une valeur d'authentification qui soit reconnue comme valide par l'authentification.

Selon une application particulière, une fonction de hachage h peut être utilisée pour le calcul de x. Dans ce cas, l'équation de vérification devient : $h(g^y / p^{2i}, D) = x$. Pour éviter toute division dans l'équation de vérification, il est aussi possible de choisir $y = r - 2^i s$ plutôt que $y = r + 2^i s$, auquel cas la seconde équation de vérification devient : $h(g^y . p^{2i} D) = x$. Une autre possibilité est de choisir $p = g^{-s}$ plutôt que $p = g^s$ qui conduit à l'équation de vérification suivante : $h(g^y . P^{2i}, D) = x$.

Pour cette solution décrite, il revient au même du point de vue de la sécurité de choisir pour valeur de t un entier compris entre 0 et m-1 à la place de la chaîne t telle que définie ci-dessus, y étant alors pris égal à : $y = r + 2^t s$ et l'équation de vérification étant : $g^y = xp^{2^t}$.

Selon une application particulière, une fonction de hachage h peut être utilisée pour le calcul de x. Dans ce cas, l'équation de vérification devient : $h(g^y / p^{2^t}, D) = x$. Pour éviter toute division dans l'équation de vérification, il est aussi possible de choisir $y = r - 2^t s$ plutôt que $y = r + 2^t s$, auquel cas la seconde équation de vérification devient : $h(g^y . p^{2^t}, D) = x$. Une autre possibilité est de choisir $p = g^{-s}$ plutôt que $p = g^s$, qui conduit à l'équation de vérification suivante : $h(g^y . p^{2t}, D) = x$ .

Il revient encore au même du point de vue de la sécurité de choisir pour valeur de t un entier compris entre 0 et m-1 à la place de la chaîne t telle que définie ci-dessus, y étant alors pris égal à : $y = r + ts$ et l'équation de vérification étant : $g^y = xp^t$ .

Selon une application particulière, une fonction de hachage h peut être utilisée pour le calcul de x. Dans ce cas, l'équation de vérification devient : $h(g^y / p^t, D) = x$. Pour éviter toute division dans l'équation de vérification, il est aussi possible de choisir $y = r - ts$ plutôt que $y = r + ts$ auquel cas la seconde équation de vérification devient : $h(g^y . p^t, D) = x$. Une autre possibilité est de choisir $p = g^{-s}$ plutôt que $p = g^s$, qui conduit à l'équation de vérification suivante : $h(g^y . p^t, D) = x$ .

L'aléa t peut bien entendu prendre d'autres valeurs.

Le second moyen 9 de sortie de la valeur V d'authentification met typiquement en oeuvre une fonction de sortie qui est la fonction identité appliquée au paramètre y. Ce moyen 9 est par exemple une zone mémoire de taille égale à la taille du paramètre y.

Lors de transactions entre une application et une puce électronique, l'application et la puce mettent en oeuvre un procédé cryptographique asymétrique de protection contre la fraude de la puce électronique selon l'invention. Lors de cette mise en oeuvre, l'application fait appel à un dispositif de vérification selon l'invention pour authentifier la puce. Le dispositif comprend un moyen de mise en oeuvre de la fonction de vérification d'un procédé selon l'invention. Ce moyen vérifie la valeur V d'authentification calculée par la puce électronique en utilisant des paramètres exclusivement publics qui comprennent au moins la clé p publique liée à la clé s secrète de la puce.

Selon un des modes de réalisation précédemment décrits d'un procédé selon l'invention, le dispositif de vérification compare le résultat $(g^y)$ fourni par la fonction mathématique appliquée à la valeur d'authentification V à une des valeurs suivantes : la valeur x, le produit $(xp$ de la valeur x avec la clé p publique de la puce correspondant à sa clé s secrète, en fonction de la valeur du paramètre t, y étant égale à la valeur d'authentification V et p étant la clé publique de la puce correspondant à sa clé secrète s, définie par la fonction $p = g^s$ .

Le moyen est typiquement un calculateur.

## Revendications

1. Procédé cryptographique asymétrique de protection contre la fraude d'une puce électronique, adapté pour des puces à logique câblée, dans des transactions entre une application et la puce électronique, consistant à calculer dans la puce électronique une valeur V d'authentification à partir de paramètres d'entrée, ledit procédé comprenant les étapes qui consistent :

- à produire (1) par la puce un nombre pseudo-aléatoire dit aléa r propre à la transaction au moyen d'un générateur pseudo-aléatoire série inclus dans la puce,
- à transmettre (2) de la puce à l'application un paramètre x calculé par l'application préalablement à la transaction, relié à l'aléa r par une relation mathématique et stocké en mémoire de données de la puce,
- à calculer (3) par la puce un paramètre y au moyen d'une fonction série ayant pour paramètres d'entrées au moins l'aléa r propre à la transaction et une clé s privée appartenant à une paire de clés asymétrique (s, p), ce paramètre y constituant tout ou partie de la valeur d'authentification V,
- à transmettre (4) la valeur d'authentification V de la puce à l'application et,
- à vérifier (5) par l'application ladite valeur d'authentification V au moyen d'une fonction de vérification dont les paramètres d'entrées consistent exclusivement en des paramètres publics, contenant au moins la clé p publique.

2. Procédé cryptographique asymétrique de protection contre la fraude d'une puce électronique selon la revendication 1 dans lequel la production de l'aléa r propre à la transaction consiste :

- à mélanger tout ou partie de paramètres d'entrée au moyen d'une fonction (12) de mélange et à fournir en sortie de la fonction de mélange une suite de bits,
- à effectuer le changement d'état d'un automate (13) à états finis en le faisant passer d'un état ancien à un état nouveau selon une fonction dépendant au moins de l'état ancien et d'une valeur de la suite de bits,
- à déterminer une suite de bits aléatoires pour former tout ou partie de l'aléa r au moyen d'une fonction (14) de sortie ayant pour argument d'entrée au moins un état de l'automate.

3. Procédé selon la revendication 2, dans lequel l'un des paramètres d'entrée de la fonction de mélange est constitué d'une clé secrète K partagée entre la puce et l'application, stockée dans une zone-mémoire protégée de la puce.

4. Procédé selon l'une des revendications 1 et 2, dans lequel la relation mathématique consiste en une fonction $g^r$ dans un ensemble G d'éléments g muni d'une opération ayant au moins pour propriété d'être associative.

5. Procédé selon la revendication 4, dans lequel l'ensemble G est le groupe $Z_n^\bullet$ des entiers positifs ou nuls inférieurs à n et premiers avec n.

6. Procédé selon la revendication 4, dans lequel l'ensemble G est toute courbe elliptique construite sur tout corps fini quelconque.

7. Procédé selon l'une des revendications 1 et 2, dans lequel la fonction série est une fonction arithmétique effectuant des opérations prises dans une liste qui comprend des additions, des soustractions et des décalages à gauche ou à droite.

8. Procédé selon la revendication 7, dans lequel la fonction arithmétique effectue uniquement des additions.

9. Procédé selon la revendication 7, dans lequel la fonction arithmétique effectue uniquement des soustractions.

10. Procédé selon la revendication 7, dans lequel la fonction arithmétique a en outre pour arguments d'entrée des paramètres d'entrée et consiste à effectuer une des opérations suivantes : $y = r$ et $y = r + s$ en fonction de la valeur attribuée par l'application à un paramètre t d'entrée de la fonction série.

11. Procédé selon la revendication 10, dans lequel la relation mathématique consiste en une fonction $g^r$ dans un ensemble G d'éléments g muni d'une opération ayant au moins pour propriété d'être associative et dans lequel la fonction de vérification compare le résultat fourni par la fonction appliquée à la valeur d'authentification V à une des valeurs suivantes : la valeur x, le produit de la valeur x avec la clé p publique de la puce correspondant à sa clé s secrète, en fonction de la valeur du paramètre t, ce qui revient à tester une des équations suivantes : $g^y = x$ et $g^y = xp$, en fonction de la valeur du paramètre t, y étant égale à la valeur d'authentification V et p étant la clé publique de la puce correspondant à sa clé secrète s, définie par la fonction $p = g^s$.

12. Procédé selon la revendication 7, dans lequel la fonction arithmétique a en outre pour arguments d'entrée des paramètres d'entrée et consiste à effectuer une des opérations suivantes : $y = r$ et $y = r - s$ en fonction de la valeur attribuée par l'application à un paramètre t d'entrée de la fonction série.

13. Procédé selon la revendication 12, dans lequel la relation mathématique consiste en une fonction $g^r$ dans un ensemble G d'éléments g muni d'une opération ayant au moins pour propriété d'être associative et dans lequel la fonction de vérification compare le résultat fourni par l'équation mathématique appliquée à la valeur d'authentification V à une des valeurs suivantes : la valeur x, le produit de la valeur x avec la clé p publique de la puce correspondant à sa clé s secrète, en fonction de la valeur du paramètre t, ce qui revient à tester une des équations suivantes : $g^y = x$ et $g^y.p = x$, en fonction de la valeur du paramètre t, y étant égale à la valeur d'authentification V et p étant la clé publique de la puce correspondant à sa clé secrète s, définie par l'équation $p = g^s$.

14. Procédé selon la revendication 7, dans lequel la fonction arithmétique a en outre pour arguments d'entrée des paramètres d'entrée et consiste à effectuer l'opération suivante : $y = r + 2^i s$ en fonction de la valeur attribuée par l'application à un paramètre t d'entrée de la fonction série, ce paramètre t consistant en une chaîne de m bits $(t_{m-1},...,t_0)$ dont un seul des bits est égal à 1, le bit $t_i$, m étant un entier naturel.

15. Procédé selon la revendication 14, dans lequel la relation mathématique consiste en une fonction $g^r$ dans un ensemble G d'éléments g muni d'une opération ayant au moins pour propriété d'être associative et dans lequel la fonction de vérification consiste à tester l'équation suivante : $g^y = xp^{2i}$, en fonction de la valeur du paramètre t, y étant égale à la valeur d'authentification V et p étant la clé publique de la puce correspondant à sa clé secrète s, définie par la fonction $p = g^s$.

16. Procédé selon la revendication 7, dans lequel la fonction arithmétique a en outre pour arguments d'entrée des paramètres d'entrée et consiste à effectuer l'opération suivante : $y = r + 2^t s$ en fonction de la valeur attribuée par l'application à un paramètre t d'entrée de la fonction série.

17. Procédé selon la revendication 16, dans lequel la relation mathématique consiste en une fonction $g^r$ dans un ensemble G d'éléments g muni d'une opération ayant au moins pour propriété d'être associative et dans lequel la fonction de vérification consiste à tester l'équation suivante : $g^y = xp^{2i}$, y étant égale à la valeur d'authentification V et p étant la clé publique de la puce correspondant à sa clé secrète s, définie par la fonction $p = g^s$.

18. Procédé selon la revendication 7, dans lequel la fonction arithmétique a en outre pour arguments d'entrée des paramètres d'entrée et consiste à effectuer l'opération suivante : $y = r + ts$ en fonction de la valeur attribuée par l'application à un paramètre t d'entrée de la fonction série, t étant un entier.

19. Procédé selon la revendication 18, dans lequel la relation mathématique consiste en une fonction $g^r$

dans un ensemble G d'éléments g muni d'une opération ayant au moins pour propriété d'être associative et dans lequel la fonction de vérification compare le résultat fourni par la fonction appliquée à la valeur d'authentification V à une des valeurs suivantes : la valeur x, le produit de la valeur x avec la clé p publique de la puce correspondant à sa clé s secrète, en fonction de la valeur du paramètre t, ce qui revient à tester l'équation suivante : $g^y = xp^t$, en fonction de la valeur du paramètre t, y étant égale à la valeur d'authentification V et p étant la clé publique de la puce correspondant à sa clé secrète s, définie par la fonction $p = g^s$.

20. Procédé selon l'une des revendications 1 et 2, dans lequel le paramètre x transmis de la puce à l'application est le résultat d'une fonction de hachage appliquée au moins à un élément relié à l'aléa r par une fonction mathématique et à un champ optionnel D contenant des données liées à l'application.

21. Procédé selon la revendication 20, dans lequel la fonction arithmétique a en outre pour arguments d'entrée des paramètres d'entrée et consiste à effectuer l'opération suivante : $y = r + 2^i s$ en fonction de la valeur attribuée par l'application à un paramètre t d'entrée de la fonction série, ce paramètre t consistant en une chaîne de m bits $(t_{m-1},...,t_0)$ dont un seul des bits est égal à 1, le bit $t_i$, m étant un entier naturel.

22. Procédé selon la revendication 21, dans lequel la relation mathématique consiste en une fonction $g^r$ dans un ensemble G d'éléments g muni d'une opération ayant au moins pour propriété d'être associative et dans lequel la fonction de vérification consiste à tester l'équation suivante : $h(g^y/p^{2i},D)=x$, en fonction de la valeur du paramètre t, y étant égale à la valeur d'authentification V et p étant la clé publique de la puce correspondant à sa clé secrète s, définie par la fonction $p=g^s$.

23. Procédé selon la revendication 21, dans lequel la relation mathématique consiste en une fonction $g^r$ dans un ensemble G d'éléments g muni d'une opération ayant au moins pour propriété d'être associative et dans lequel la fonction de vérification consiste à tester l'équation suivante : $h(g^y.p^{2i},D) = x$, y étant égale à la valeur d'authentification V et p étant la clé publique de la puce correspondant à sa clé secrète s, définie par la fonction $p = g^{-s}$.

24. Procédé selon la revendication 20, dans lequel la fonction arithmétique a en outre pour arguments d'entrée des paramètres d'entrée et consiste à effectuer l'opération suivante : $y = r - 2^i s$ s en fonction de la valeur attribuée par l'application à un paramètre t d'entrée de la fonction série, ce paramètre t consistant en une chaîne de m bits $(t_{m-1},...,t_0)$ dont un seul des bits est égal à 1, le bit $t_i$, m étant un entier naturel..

25. Procédé selon la revendication 24, dans lequel la relation mathématique consiste en une fonction $g^r$ dans un ensemble G d'éléments g muni d'une opération ayant au moins pour propriété d'être associative et dans lequel la fonction de vérification consiste à tester l'équation suivante : $h(g^y.p^{2^i},D) = x$, y étant égale à la valeur d'authentification V et p étant la clé publique de la puce correspondant à sa clé secrète s, définie par la fonction $p = g^s$.

26. Procédé selon la revendication 20, dans lequel la fonction mathématique consiste en une fonction $g^r$ dans un ensemble G d'éléments g muni d'une opération ayant au moins pour propriété d'être associative et dans lequel le paramètre x transmis de la puce à l'application est le résultat d'une relation du type $x=h(g^r,D)$, où D désigne un champ optionnel contenant des données liées à l'application et h est la fonction de hachage.

27. Procédé selon la revendication 26, dans lequel la fonction série a pour arguments d'entrée des paramètres d'entrée, et consiste à effectuer une des opérations suivantes : $y = r$ et $y = r + s$ en fonction de la valeur attribuée par l'application à un paramètre t d'entrée de la fonction série et dans lequel la fonction de vérification compare la valeur x à une des valeurs suivantes : $h(g^y,D)$, $h(g^y / p,D)$, en fonction de la valeur du paramètre t, y étant égale à la valeur d'authentification V et p étant la clé publique de la puce correspondant à sa clé secrète s, définie par l'équation $p = g^s$.

28. Procédé selon la revendication 26, dans lequel la fonction série a pour arguments d'entrée des paramètres d'entrée, et consiste à effectuer une des opérations suivantes : $y = r$ et $y = r + s$ en fonction de la valeur attribuée par l'application à un paramètre t d'entrée de la fonction série et dans lequel la fonction de vérification compare la valeur x à une des valeurs suivantes : $h(g^y,D)$, $h(g^y.p,D)$, en fonction de la valeur du paramètre t, y étant égale à la valeur d'authentification V et p étant la clé publique de la puce correspondant à sa clé secrète s, définie par l'équation $p = g^s$.

29. Procédé selon la revendication 26, dans lequel la fonction série a pour arguments d'entrée des paramètres d'entrée, et consiste à effectuer une des opérations suivantes : $y = r$ et $y = r - s$ en fonction de la valeur attribuée par l'application à un paramètre t d'entrée de la fonction série et dans lequel la fonction de vérification compare la valeur x à une des valeurs suivantes : $h(g^y,D)$ , $h(g^y.p,D)$, en fonction de la valeur du paramètre t, y étant égale à la valeur d'authentification V et p étant la clé publique de la puce correspondant à sa clé secrète s, définie par l'équation $p = g^s$.

30. Procédé selon l'une des revendications 7 à 29, dans lequel l'ensemble G est le groupe $Z_n^*$ des entiers positifs ou nuls inférieurs à n et premiers avec n.

31. Procédé selon l'une des revendications 7 à 29, dans lequel l'ensemble G est toute courbe elliptique construite sur tout corps fini quelconque.

32. Dispositif (6) à puce électronique permettant la mise en oeuvre d'un procédé cryptographique asymétrique de protection contre la fraude de la puce électronique selon l'une des revendications précédentes, dans des transactions entre une application et la puce électronique, consistant à calculer par la puce électronique une valeur V d'authentification à partir de paramètres d'entrée, ledit dispositif comprenant :

   - un générateur (7) pseudo-aléatoire série produisant un aléa r propre à la transaction,
   - un premier moyen (8) de mémorisation dans lequel est stocké au moins une valeur de x, la valeur du paramètre x étant calculée préalablement à la transaction par l'application et étant reliée à la valeur de l'aléa r par une relation mathématique,
   - un moyen (9) de transmission de la puce électronique à l'application du paramètre x relié à l'aléa r propre à la transaction,
   - un moyen (10) de mise en oeuvre d'une fonction série ayant pour paramètres d'entrées au moins l'aléa r propre à la transaction et une clé s privée appartenant à une paire de clés asymétrique (s, p) et fournissant en sortie un paramètre y,
   - un moyen (9) de sortie pour constituer la valeur V d'authentification à partir d'au moins le paramètre y.

**Claims**

1. Asymmetric cryptographic method for protection of an electronic chip against fraud, designed for chips with hard-wired logic, in transactions between an application and the electronic chip, consisting in calculating in the electronic chip an authentication value V from input parameters, said method comprising the steps which consist in:

   - producing (1), through the chip, a pseudo-random number, called random number r, specific to the transaction by means of a pseudo-random series generator included in the chip;
- transmitting (2), from the chip to the application, a parameter x calculated by the application prior to the transaction, related to the random number r by a mathematical relation and stored in data memory of the chip;
- calculating (3), through the chip, a parameter y by means of a series function having as input parameters at least the random number r specific to the transaction and a private key s belonging to a pair of asymmetric keys (s, p), this parameter y constituting all or part of the authentication value V;
- transmitting (4) the authentication value V from the chip to the application; and
- checking (5), through the application, said authentication value V by means of a check function, the input parameters of which consist exclusively of public parameters containing at least the public key p.

2. Asymmetric cryptographic method for protection of an electronic chip against fraud according to Claim 1, in which the production of the random number r specific to the transaction consists in:

- mixing all or part of input parameters by means of a mixing function (12) and providing a sequence of bits as output from the mixing function;
- effecting the change of state of a finite state automaton (13) by causing it to shift from an old state to a new state according to a function depending on at least the old state and a value from the bit sequence;
- determining a random bit sequence for shaping all or part of the random number r by means of an output function (14) having at least a state of the automaton as an input argument.

3. Method according to Claim 2, in which one of the input parameters of the mixing function consists of a secret key K shared between the chip and the application and stored in a protected memory area of the chip.

4. Method according to one of Claims 1 and 2, in which the mathematical relation consists of a function $g^r$ in a set G of elements g provided with an operation having at least the property of being associative.

5. Method according to Claim 4, in which the set G is the group $Z_n^*$ of positive or zero integers less than n and prime with n.

6. Method according to Claim 4, in which the set G is any elliptical curve constructed over any finite field.

7. Method according to one of Claims 1 and 2, in which the series function is an arithmetic function carrying out operations taken from a list that comprises additions, subtractions, and left or right shifts.

8. Method according to Claim 7, in which the arithmetic function carries out only additions.

9. Method according to Claim 7, in which the arithmetic function carries out only subtractions.

10. Method according to Claim 7, in which the arithmetic function furthermore has input parameters as input arguments and consists in carrying out one of the following operations: y=r and y=r+s depending on the value attributed by the application to an input parameter t of the series function.

11. Method according to Claim 10, in which the mathematical relation consists of a function $g^r$ in a set G of elements g provided with an operation having at least the property of being associative and in which the check function compares the result provided by the function applied to the authentication value V with one of the following values: the value x, the product of the value x and the public key p of the chip corresponding to its secret key s, depending on the value of the parameter t, which amounts to testing one of the following equations: $g^y=x$ and $g^y=xp$, depending on the value of the parameter t, y being equal to the authentication value V and p being the public key of the chip corresponding to its secret key s, defined by the function $p=g^s$.

12. Method according to Claim 7, in which the arithmetic function furthermore has input parameters as input arguments and consists in carrying out one of the following operations: y=r and y=r-s depending on the value attributed by the application to an input parameter t of the series function.

13. Method according to Claim 12, in which the mathematical relation consists of a function $g^r$ in a set G of elements g provided with an operation having at least the property of being associative and in which the check function compares the result provided by the mathematical equation applied to the authentication value V with one of the following values: the value x, the product of the value x and the public key p of the chip corresponding to its secret key s, depending on the value of the parameter t, which amounts to testing one of the following equations: $g^y=x$ and $g^y.p=x$, depending on the value of the parameter t, y being equal to the authentication value V and p being the public key of the chip corresponding to its secret key s, defined by the function $p=g^s$.

14. Method according to Claim 7, in which the arithmetic function furthermore has input parameters as input arguments and consists in carrying out the following operation: $y=r+2^i s$ depending on the value attributed by the application to an input parameter t of the series function, this parameter t consisting of a string of m bits $(t_{m-1}, ..., t_0)$ of which a single bit is equal to 1, the bit $t_i$, m being a natural integer.

15. Method according to Claim 14, in which the mathematical relation consists of a function $g^r$ in a set G of elements g provided with an operation having at least the property of being associative and in which the check function consists in testing the following equation: $g^y = x p^{2i}$, depending on the value of the parameter t, y being equal to the authentication value V and p being the public key of the chip corresponding to its secret key s, defined by the function $p=g^s$.

16. Method according to Claim 7, in which the arithmetic function furthermore has input parameters as input arguments and consists in carrying out the following operation: $y=r+2^t s$ depending on the value attributed by the application to an input parameter t of the series function.

17. Method according to Claim 16, in which the mathematical relation consists of a function $g^r$ in a set G of elements g provided with an operation having at least the property of being associative and in which the check function consists in testing the following equation: $g^y = x p^{2i}$, y being equal to the authentication value V and p being the public key of the chip corresponding to its secret key s, defined by the function $p=g^s$.

18. Method according to Claim 7, in which the arithmetic function furthermore has input parameters as input arguments and consists in carrying out the following operation: $y=r+ts$ depending on the value attributed by the application to an input parameter t of the series function, t being an integer.

19. Method according to Claim 18, in which the mathematical relation consists of a function $g^r$ in a set G of elements g provided with an operation having at least the property of being associative and in which the check function compares the result provided by the function applied to the authentication value V with one of the following values: the value x, the product of the value x and the public key p of the chip corresponding to its secret key s, depending on the value of the parameter t, which amounts to testing the following equation: $g^y = x p^t$, depending on the value of the parameter t, y being equal to the authentication value V and p being the public key of the chip corresponding to its secret key s, defined by the function $p=g^s$.

20. Method according to one of Claims 1 and 2, in which the parameter x transmitted from the chip to the application is the result of a hash function applied to at least one element related to the random number r by a mathematical function and with an optional field D containing data linked with the application.

21. Method according to Claim 20, in which the arithmetic function furthermore has input parameters as input arguments and consists in carrying out the following operation: $y=r+2^i s$, depending on the value attributed by the application to an input parameter t of the series function, this parameter t consisting of a string of m bits $(t_{m-1}, ..., t_0)$ of which a single bit is equal to 1, the bit $t_i$, m being a natural integer.

22. Method according to Claim 21, in which the mathematical relation consists of a function $g^r$ in a set G of elements g provided with an operation having at least the property of being associative and in which the check function consists in testing the following equation: $h(g^y/p^{2i}, D)=x$, depending on the value of the parameter t, y being equal to the authentication value V and p being the public key of the chip corresponding to its secret key s, defined by the function $p=g^s$.

23. Method according to Claim 21, in which the mathematical relation consists of a function $g^r$ in a set G of elements g provided with an operation having at least the property of being associative and in which the check function consists in testing the following equation: $h(g^y \cdot p^{2i}, D)=x$, y being equal to the authentication value V and p being the public key of the chip corresponding to its secret key s, defined by the function $p=g^{-s}$.

24. Method according to Claim 20, in which the arithmetic function furthermore has input parameters as input arguments and consists in carrying out the following operation: $y=r-2^i s$, depending on the value attributed by the application to an input parameter t of the series function, this parameter t consisting of a string of m bits $(t_{m-1}, ..., t_0)$ of which a single bit is equal to 1, the bit $t_i$, m being a natural integer.

25. Method according to Claim 24, in which the mathematical relation consists of a function $g^r$ in a set G of elements g provided with an operation having at least the property of being associative and in which the check function consists in testing the following equation: $h(g^y \cdot p^{2i}, D)=x$, y being equal to the authentication value V and p being the public key of the chip corresponding to its secret key s, defined by the function $p=g^s$.

26. Method according to Claim 20, in which the mathematical function consists of a function $g^r$ in a set G of elements g provided with an operation having at least the property of being associative and in which the parameter x transmitted from the chip to the application is the result of a relation of the type $x=h(g^r, D)$, where D denotes an optional field D containing data linked with the application and h is the hash function.

27. Method according to Claim 26, in which the series function has input parameters as input arguments and consists in carrying out one of the following operations: y=r and y=r+s, depending on the value attributed by the application to an input parameter t of the series function and in which the check function compares the value x with one of the following values: $h(g^y, D)$, $h(g^y/p, D)$, depending on the value of the parameter t, y being equal to the authentication value V and p being the public key of the chip corresponding to its secret key s, defined by the function $p=g^s$.

28. Method according to Claim 26, in which the series function has input parameters as input arguments and consists in carrying out one of the following operations: y=r and y=r+s, depending on the value attributed by the application to an input parameter t of the series function and in which the check function compares the value x with one of the following values: $h(g^y, D)$, $h(g^y.p, D)$, depending on the value of the parameter t, y being equal to the authentication value V and p being the public key of the chip corresponding to its secret key s, defined by the function $p=g^{-s}$.

29. Method according to Claim 26, in which the series function has input parameters as input arguments and consists in carrying out one of the following operations: y=r and y=r-s, depending on the value attributed by the application to an input parameter t of the series function and in which the check function compares the value x with one of the following values: $h(g^y, D)$, $h(g^y.p, D)$, depending on the value of the parameter t, y being equal to the authentication value V and p being the public key of the chip corresponding to its secret key s, defined by the function $p=g^s$.

30. Method according to one of Claims 7 to 29, in which the set G is the group $Z_n^*$ of positive or zero integers less than n and prime with n.

31. Method according to one of Claims 7 to 29, in which the set G is any elliptical curve constructed over any finite field.

32. Electronic chip device (6) allowing the implementation of an asymmetric cryptographic method for protection of the electronic chip against fraud according to one of the preceding claims, in transactions between an application and the electronic chip, consisting in calculating by the electronic chip an authentication value V from input parameters, said device comprising:

- a pseudo-random series generator (7) producing a random number r specific to the transaction;
- a first memory means (8) in which at least one value of x is stored, the value of the parameter x being calculated prior to the transaction by the application and being related to the value of the random number r by a mathematical relation;
- a means for transmitting (9), from the electronic chip to the application, the parameter x related to the random number r specific to the transaction;
- a means (10) of implementing a series function having as input parameters at least the random number r specific to the transaction and a private key s belonging to a pair of asymmetric keys (s, p) and providing a parameter y as output;
- an output means (9) for constituting the authentication value V from at least the parameter y.

**Patentansprüche**

1. Asymmetrisches kryptographisches Verfahren, das für Chips mit verkabelter Logik geeignet ist, zum Schutz eines Mikrochips vor Betrug bei Transaktionen zwischen einer Anwendung und dem Mikrochip, das darin besteht, in dem Mikrochip ausgehend von Eingangsparametern einen Authentifizierungswert V zu berechnen, wobei das Verfahren die Schritte enthält, die darin bestehen:

- durch den Chip eine für die Transaktion spezifische pseudozufällige Zahl, Zufälligkeit r genannt, mittels eines im Chip enthaltenen Reihen-Pseudozufallsgenerators zu erzeugen (1),
- vom Chip an die Anwendung einen Parameter x zu übertragen (2), der von der Anwendung vor der Transaktion berechnet wird, mit der Zufälligkeit r durch eine mathematische Beziehung verbunden und im Datenspeicher des Chips gespeichert ist,
- durch den Chip einen Parameter y mittels einer Serienfunktion zu berechnen (3), die als Eingangsparameter mindestens die für die Transaktion spezifische Zufälligkeit r und einen privaten Schlüssel s hat, der zu einem asymmetrischen Paar von Schlüsseln (s, p) gehört, wobei dieser Parameter y den ganzen oder einen Teil des Authentifizierungswerts V bildet,
- den Authentifizierungswert V des Chips an die Anwendung zu übertragen (4), und

- durch die Anwendung den Authentifizierungswert V mittels einer Überprüfungsfunktion zu überprüfen (5), deren Eingangsparameter ausschließlich aus öffentlichen Parametern bestehen, die mindestens den öffentlichen Schlüssel p enthalten.

2. Asymmetrisches kryptographisches Verfahren zum Schutz eines Mikrochips vor Betrug nach Anspruch 1, bei dem die Erzeugung der für die Transaktion spezifischen Zufälligkeit r darin besteht:

   - alle oder einen Teil der Eingangsparameter mittels einer Mischfunktion (12) zu mischen und am Ausgang der Mischfunktion eine Bitfolge zu liefern,
   - die Zustandsänderung eines Automaten (13) mit endlichen Zuständen durchzuführen, indem er gemäß einer Funktion von einem alten in einen neuen Zustand gebracht wird, die mindestens vom alten Zustand und von einem Wert der Bitfolge abhängt,
   - eine Folge von Zufallsbits zu bestimmen, um die ganze oder einen Teil der Zufälligkeit r mittels einer Ausgangsfunktion (14) zu formen, die als Eingangsargument mindestens einen Zustand des Automaten hat.

3. Verfahren nach Anspruch 2, bei dem einer der Eingangsparameter der Mischfunktion aus einem geheimen Schlüssel K besteht, den sich der Chip und die Anwendung teilen und der in einem geschützten Speicherbereich des Chips gespeichert ist.

4. Verfahren nach einem der Ansprüche 1 und 2, bei dem die mathematische Beziehung aus einer Funktion $g^r$ in einem Satz G von Elementen g besteht, der mit einer Operation ausgestattet ist, die zumindest die Eigenschaft hat, assoziativ zu sein.

5. Verfahren nach Anspruch 4, bei dem der Satz G die Gruppe $Z_n^*$ der positiven ganzen Zahlen oder ganzen Zahlen Null geringer als n und teilerfremd mit n ist.

6. Verfahren nach Anspruch 4, bei dem der Satz G jede elliptische Kurve ist, die auf einem beliebigen endlichen Körper konstruiert ist.

7. Verfahren nach einem der Ansprüche 1 und 2, bei dem die Serienfunktion eine arithmetische Funktion ist, die die Operationen ausführt, die aus einer Liste entnommen werden, welche Additionen, Subtraktionen und Verschiebungen nach links oder rechts enthält.

8. Verfahren nach Anspruch 7, bei dem die arithmetische Funktion nur Additionen ausführt.

9. Verfahren nach Anspruch 7, bei dem die arithmetische Funktion nur Subtraktionen ausführt.

10. Verfahren nach Anspruch 7, bei dem die arithmetische Funktion außerdem als Eingangsargumente Eingangsparameter hat und darin besteht, eine der folgenden Operationen: $y = r$ und $y = r + s$ in Abhängigkeit von dem Wert auszuführen, der von der Anwendung einem Eingangsparameter t der Serienfunktion zugeteilt wird.

11. Verfahren nach Anspruch 10, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion das von der an den Authentifizierungswert V angewendeten Funktion gelieferte Ergebnis mit einem der folgenden Werte vergleicht: dem Wert x, dem Produkt aus dem Wert x und dem öffentlichen Schlüssel p des Chips entsprechend seinem geheimen Schlüssel s, in Abhängigkeit vom Wert des Parameters t, was darauf hinausläuft, eine der folgenden Gleichungen: $g^y = x$ und $g^y = xp$ in Abhängigkeit vom Wert des Parameters t zu testen, wobei y dem Authentifizierungswert V gleicht und p der öffentliche Schlüssel des Chips entsprechend seinem geheimen Schlüssel s ist, definiert durch die Funktion $p = g^s$.

12. Verfahren nach Anspruch 7, bei dem die arithmetische Funktion außerdem als Eingangsargumente Eingangsparameter hat und darin besteht, eine der folgenden Operationen: $y = r$ und $y = r - s$ in Abhängigkeit von dem durch die Anwendung einem Eingangsparameter t der Serienfunktion zugeteilten Wert auszuführen.

13. Verfahren nach Anspruch 12, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion das von der an den Authentifizierungswert V angewendeten mathematischen Gleichung gelieferte Ergebnis mit einem der folgenden Werte vergleicht: dem Wert x, dem Produkt aus dem Wert x und dem öffentlichen Schlüssel p des Chips entsprechend seinem geheimen Schlüssel s, in Abhängigkeit vom Wert des Parameters t, was darauf hinausläuft, eine der folgenden Gleichungen: $g^y = x$ und $g^y \cdot p = x$ in Abhängigkeit vom Wert des Parameters t zu testen, wobei y dem Authentifizierungswert V gleicht und p der öffentliche Schlüssel des Chips entsprechend seinem geheimen Schlüssel s ist, definiert durch die Funktion $p = g^s$.

**14.** Verfahren nach Anspruch 7, bei dem die arithmetische Funktion außerdem als Eingangsargumente Eingangsparameter hat und darin besteht, die folgende Operation: $y = r + 2^i s$ in Abhängigkeit von dem von der Anwendung einem Eingangsparameter t der Serienfunktion zugeteilten Wert auszuführen, wobei dieser Parameter t aus einer Kette von m Bits $(t_{m-1}, ..., t_0)$ besteht, von denen nur eines der Bits gleich 1 ist, das Bit $t_i$, wobei m eine natürliche Zahl ist.

**15.** Verfahren nach Anspruch 14, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion darin besteht, die folgende Gleichung: $g^y = xp^{2^i}$ in Abhängigkeit vom Wert des Parameters t zu testen, wobei y dem Authentifizierungswert V gleicht und p der öffentliche Schlüssel des Chips entsprechend seinem geheimen Schlüssel s ist, definiert durch die Funktion $p = g^s$.

**16.** Verfahren nach Anspruch 7, bei dem die arithmetische Funktion außerdem als Eingangsargumente Eingangsparameter hat und darin besteht, die folgende Operation: $y = r + 2^t s$ in Abhängigkeit von dem Wert auszuführen, der von der Anwendung einem Eingangsparameter t der Serienfunktion zugeteilt wird.

**17.** Verfahren nach Anspruch 16, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion darin besteht, die folgende Gleichung: $g^y = xp^{2^i}$ zu testen, wobei y dem Authentifizierungswert V gleicht und p der öffentliche Schlüssel des Chips entsprechend seinem geheimen Schlüssel s ist, definiert durch die Funktion $p = g^s$.

**18.** Verfahren nach Anspruch 7, bei dem die arithmetische Funktion außerdem als Eingangsargumente Eingangsparameter hat und darin besteht, die folgende Operation: $y = r + ts$ in Abhängigkeit von dem Wert auszuführen, der von der Anwendung einem Eingangsparameter t der Serienfunktion zugeteilt wird, wobei t eine ganze Zahl ist.

**19.** Verfahren nach Anspruch 18, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion das von der an den Authentifizierungswert V angewendeten Funktion gelieferte Ergebnis mit einem der folgenden Werte vergleicht: dem Wert x, dem Produkt aus dem Wert x und dem öffentlichen Schlüssel p des Chips entsprechend seinem geheimen Schlüssel s, in Abhängigkeit vom Wert des Parameters t, was darauf hinausläuft, die folgende Gleichung: $g^y = xp^t$ in Abhängigkeit vom Wert des Parameters t zu testen, wobei y dem Authentifizierungswert V gleicht und p der öffentliche Schlüssel des Chips entsprechend seinem geheimen Schlüssel s ist, definiert durch die Funktion $p = g^s$.

**20.** Verfahren nach einem der Ansprüche 1 und 2, bei dem der vom Chip zur Anwendung übertragene Parameter x das Ergebnis einer Hashfunktion ist, die mindestens an ein mit der Zufälligkeit r durch eine mathematische Funktion verbundenes Element und an ein optionales Feld D angewendet wird, das mit der Anwendung verbundene Daten enthält.

**21.** Verfahren nach Anspruch 20, bei dem die arithmetische Funktion außerdem als Eingangsargumente Eingangsparameter hat und darin besteht, die folgende Operation: $y = r + 2^i s$ in Abhängigkeit von dem Wert auszuführen, der von der Anwendung einem Eingangsparameter t der Serienfunktion zugeteilt wird, wobei dieser Parameter t aus einer Kette von m Bits $(t_{m-1}, ..., t_0)$ besteht, von denen ein einziges Bit gleich 1 ist, das Bit $t_i$, wobei m eine natürliche Zahl ist.

**22.** Verfahren nach Anspruch 21, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion darin besteht, die folgende Gleichung: $h(g^y/p^{2^i}, D) = x$ in Abhängigkeit von dem Wert des Parameters t zu testen, wobei y dem Authentifizierungswert V gleicht und p der öffentliche Schlüssel des Chips entsprechend seinem geheimen Schlüssel s ist, definiert durch die Funktion $p = g^s$.

**23.** Verfahren nach Anspruch 21, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion darin besteht, die folgende Gleichung: $h(g^y \cdot p^{2^i}, D) = x$ zu testen, wobei y dem Authentifizierungswert V gleicht und p der öffentliche Schlüssel des Chips entsprechend seinem geheimen Schlüssel s ist, definiert durch die Funktion $p = g^{-s}$.

**24.** Verfahren nach Anspruch 20, bei dem die arithmetische Funktion außerdem als Eingangsargumente Eingangsparameter hat und darin besteht, die folgende Operation: $y = r - 2^i s$ in Abhängigkeit von dem durch die Anwendung einem Eingangsparameter t der Serienfunktion zugeteilten Wert auszuführen, wobei dieser Parameter t aus einer Kette von m Bits

$(t_{m-1}, ..., t_0)$ besteht, von denen nur ein Bit gleich 1 ist, das Bit $t_i$, wobei m eine natürliche ganze Zahl ist.

25. Verfahren nach Anspruch 24, bei dem die mathematische Beziehung aus einer Funktion $g^r$ in einem Satz G von Elementen g besteht, der mit einer Operation ausgestattet ist, die mindestens die Eigenschaft hat, assoziativ zu sein, und bei dem die Überprüfungsfunktion darin besteht, die folgende Gleichung: $h(g^y \cdot p^{2i}, D) = x$ zu testen, wobei y dem Authentifizierungswert V gleicht und p der öffentliche Schlüssel des Chips entsprechend seinem geheimen Schlüssel s ist, definiert durch die Funktion $p = g^s$.

26. Verfahren nach Anspruch 20, bei dem die mathematische Funktion aus einer Funktion $g^r$ in einem Satz G von Elementen g besteht, der mit einer Operation ausgestattet ist, die mindestens die Eigenschaft hat, assoziativ zu sein, und bei dem der vom Chip an die Anwendung übertragene Parameter x das Ergebnis einer Beziehung des Typs $x = h(g^r, D)$ ist, wobei D ein optionales Feld bezeichnet, das mit der Anwendung verbundene Daten enthält, und h die Hashfunktion ist.

27. Verfahren nach Anspruch 26, bei dem die Serienfunktion als Eingangsargumente Eingangsparameter hat und darin besteht, eine der folgenden Operationen: $y = r$ und $y = r + s$ in Abhängigkeit von dem Wert auszuführen, der von der Anwendung einem Eingangsparameter t der Serienfunktion zugeteilt wird, und bei dem die Überprüfungsfunktion den Wert x mit einem der folgenden Werte: $h(g^y, D)$, $h(g^y/p, D)$ in Abhängigkeit von dem Wert des Parameters t vergleicht, wobei y dem Authentifizierungswert V gleicht und p der öffentliche Schlüssel des Chips entsprechend seinem geheimen Schlüssel s ist, definiert durch die Gleichung $p = g^s$.

28. Verfahren nach Anspruch 26, bei dem die Serienfunktion als Eingangsargumente Eingangsparameter hat und darin besteht, eine der folgenden Operationen: $y = r$ und $y = r + s$ in Abhängigkeit von dem von der Anwendung einem Eingangsparameter t der Serienfunktion zugeteilten Wert auszuführen, und bei dem die Überprüfungsfunktion den Wert x mit einem der folgenden Werte: $h(g^y, D)$, $h(g^y \cdot p, D)$, in Abhängigkeit vom Wert des Parameters t vergleicht, wobei y dem Authentifizierungswert V gleicht und p der öffentliche Schlüssel des Chips entsprechend seinem geheimen Schlüssel s ist, definiert durch die Gleichung $p = g^{-s}$.

29. Verfahren nach Anspruch 26, bei dem die Serienfunktion als Eingangsargumente Eingangsparameter hat und darin besteht, eine der folgenden Operationen: $y = r$ und $y = r - s$ in Abhängigkeit von dem durch die Anwendung einem Eingangsparameter t der Serienfunktion zugeteilten Wert auszuführen, und bei dem die Überprüfungsfunktion den Wert x mit einem der folgenden Werte: $h(g^y, D)$, $h(g^y \cdot p, D)$, in Abhängigkeit vom Wert des Parameters t vergleicht, wobei y dem Authentifizierungswert V gleicht und p der öffentliche Schlüssel des Chips entsprechend seinem geheimen Schlüssel s ist, definiert durch die Gleichung $p = g^s$.

30. Verfahren nach einem der Ansprüche 7 bis 29, bei dem der Satz G die Gruppe $Z_n^*$ der positiven ganzen Zahlen oder ganzen Zahlen Null geringer als n und teilerfremd mit n ist.

31. Verfahren nach einem der Ansprüche 7 bis 29, bei dem der Satz G jede elliptische Kurve ist, die an jedem beliebigen endlichen Körper konstruiert wird.

32. Mikrochip-Vorrichtung (6), die die Durchführung eines asymmetrischen kryptographischen Verfahrens zum Schutz des Mikrochips vor Betrug gemäß einem der vorhergehenden Ansprüche bei Transaktionen zwischen einer Anwendung und dem Mikrochip ermöglicht, das darin besteht, durch den Mikrochip einen Authentifizierungswert V ausgehend von Eingangsparametern zu berechnen, wobei die Vorrichtung enthält:

    - einen Serien-Pseudozufallsgenerator (7), der eine für die Transaktion spezifische Zufälligkeit r erzeugt,
    - eine erste Speichereinrichtung (8), in der mindestens ein Wert von x gespeichert ist, wobei der Wert des Parameters x vor der Transaktion von der Anwendung berechnet wird und mit dem Wert der Zufälligkeit r durch eine mathematische Beziehung verbunden ist,
    - eine Einrichtung (9) zur Übertragung vom Mikrochip zur Anwendung des mit der für die Transaktion spezifischen Zufälligkeit r verbundenen Parameters x,
    - eine Einrichtung (10) zur Durchführung einer Serienfunktion, die als Eingangsparameter mindestens die für die Transaktion spezifische Zufälligkeit r und einen privaten Schlüssel s hat, der zu einem asymmetrischen Paar von Schlüsseln (s, p) gehört und am Ausgang einen Parameter y liefert,
    - eine Ausgangseinrichtung (9), um den Authentifizierungswert V ausgehend von mindestens dem Parameter y zu bilden.

**Fig. 1**

```
┌─────────────────────────┐
│  Production d'un nombre  │──1
│    pseudo aléatoire  r   │
└─────────────────────────┘
            │
            ▼
┌─────────────────────────┐
│  Transmission du paramètre│──2
│    x à l'application     │
└─────────────────────────┘
            │
            ▼
┌─────────────────────────┐
│   Calcul d'un paramètre y│
│ au moyen d'une fonction série│──3
│           et            │
│   élaboration de la valeur│
│   d'authentification V à │
│        partir de y      │
└─────────────────────────┘
            │
            ▼
┌─────────────────────────┐
│    Transmission de V    │──4
│      à l'application    │
└─────────────────────────┘
            │
            ▼
┌─────────────────────────┐
│  Vérification par l'application│
│   de la valeur V au moyen │──5
│  d'une fonction de vérification│
└─────────────────────────┘
```

**Fig. 2**

**Fig. 3**

Moyens de mélange — 12

$E' = (e'_1, e'_2, ....., e'_n, ....., e'_N)$

Automate à états finis — 13

Moyen de sortie — 14

6

r

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2826531